Europäisches Patentamt

European Patent Office

Office européen des brevets

(11) Publication number: **0 285 577**
A2

## (12) EUROPEAN PATENT APPLICATION

(21) Application number: **88830118.1**

(22) Date of filing: **25.03.88**

(51) Int. Cl.⁴: **A 21 C 3/06**
A 21 C 9/04

(30) Priority: **03.04.87 IT 4780387**

(43) Date of publication of application:
**05.10.88 Bulletin 88/40**

(84) Designated Contracting States:
**AT BE CH DE ES FR GB GR IT LI LU NL SE**

(71) Applicant: **Brancato, Giuseppe**
**Via Celio Caldo 111**
**Roma (IT)**

(72) Inventor: **Brancato, Giuseppe**
**Via Celio Caldo 111**
**Roma (IT)**

(74) Representative: **Sneider, Massimo**
**Studio Lenzi Via Lucania 13**
**I-00187 Roma (IT)**

(54) **A method for forming rolls of dough, and in particular rolls of puffpastry dough, and a machine for carring out the method.**

(57) According to the method, one surface of the sheet of dough coming from a feed roll, while this last is unwinding, is sprinkled with an edible fat in such a manner that a uniform film of fat is deposited on the dough surface. The layer of dough, with its fat-filmed face turned upwards, is made to go up to a trough in which, oving to its consistency, to its thickness and to the relative movement of the trough walls, it coils upon itself spiral-wise, the fat-filmed surface keeping the several coils separate the one from the other.

The machine for carrying out the method outlined above substantially comprise a feed roll, a cylinder applying the fat, an oscillating bed holding a conveyor belt that makes the layer of dough advance, and a trough whose walls are two section of the conveyor belt.

EP 0 285 577 A2

## Description

"A method for forming rolls of dough, and in particular rolls of puff-pastry dough, and a machine for carrying out the method".

It is a known fact that some forms of dough, whether pastry dough or other, are made up of a layer of dough (puff-pastry dough, for example) that is rolled around on itself, at the same time or later on being filled with some desired material. It is quite as well established a fact that the dough's final appearance is given to it by hand, a portion of the dough being taken from the dough layer, it being hand-rolled around on itself, and the cylinder of dough thus formed being cut to the desired length, the roll or cylindrical body obtained being subsequently filled.

This operation clearly demands some time and numerous, well-trained, personnel, when it is wished to carry on a production to industrial scale, or even cottage-industrial, the consequence being high production costs, and this, whatever the product's esthetic aspect may be.

One subject of this invention is a method of forming rolls of food dough, and in particular of puff-pastry dough.

Another subject of this invention is a machine for carrying out said method.

According to the invention's method, the layer of dough is wound on a receiving feed roll, one preferably made of wood, the cylinder so set up as to make it possible to unwind the sheet of dough from it. One surface of the dough sheet is sprinkled, during the unwinding of the dough from the feed roll, with an edible fat in such a fashion that a uniform film of fat is deposited on the dough surface, this fat film keeping the layers of dough from adhering together as the rest of the treatment goes on. Then, the dough sheet, with its fat-filmed face upwards, is made to advance up to a sort of trough, whose shape is substantially that of a V, in which, owing to the dough's thickness and consistency, it tends to wind back upon itself spiral-wise, the fat-filmed surface keeping the several coils separate the one from the other. Once the number of coils desired has been reached, the advance of the sheet of dough is arrested and the roll is taken from the trough, a new roll then being started.

As mentioned, another subject of this invention is a machine that makes it possible to carry out the above method simply and economically.

According to this invention, the machine substantially comprises a feed roll, a fat applier roller, a conveyor belt on which the sheet of dough is placed to advance it, and a V-section trough whose sides are formed by two sections of the conveyor belt. Completing the machine then are means for easily accessing the feed roll, for taking out the rolled dough and for replacing the spent feed roll, and for easily accessing the fat-applier cylinder. Keep in mind that the dough must main tain a definite thickness and thus may not pass between rollers that would reduce its thickness.

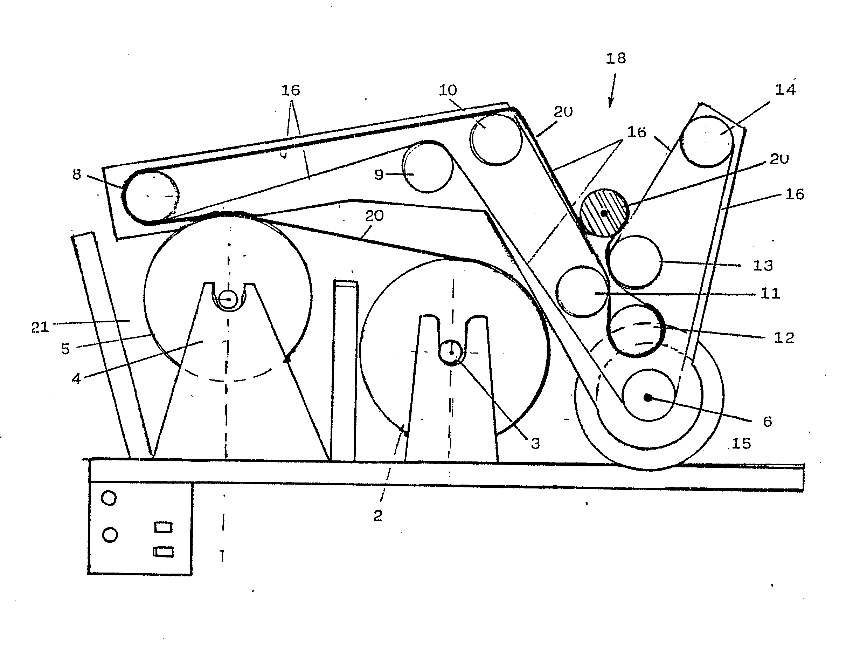

The preferred form of the machine will now be described, reference being made to the attached drawing, in which it is schematically shown. The description of the machine will also more clearly explain how the invention's method works as well.

Referring now to the drawing mentioned, the machine substantially comprises, going from bottom to top, a support plane or bed (1), from which a pair of supports (2) rise, these holding the feed roll (3); on that bed there is another pair of supports (4) for a fat-applier cylinder (5); the machine also comprises a shaft (6) holding, fulcrumed upon it, two symmetric sides (7) forming the bed, between which are inserted the conveyor rollers (8, 9, 10, 11, 12, 13, 14, and 15) forming a continuous conveyor belt (16).

Rollers(11, 12, and 13) have, as the drawing better shows, a reciprocal arrangement such as to -- and whose purpose in fact is to -- bring the two sides of the belt (16) together so as to make it form a V, this being generically indicated at (18).

The bed formed by the sides (7), hinged as remarked on shaft (6), holds both the operating and return sections of the belt (16). The return section of belt (16), before winding around conveyor roller (8) is in light contact with the dough sheet (20) coming from the feed roll (3), thus making it rub against the outer surface of the fat-applier cylinder (5). Roller (9) performs the task of tension roller, as well as the task of keeping the lower section of the belt (16) within the bed's profile, which bed being formed by the sides (7).

As mentioned, supports (2) have their upper parts shaped yoke-wise (19) so as to make it easy to replace the sheet-dough feed roller.

As mentioned above too, the dough sheet (20) coming from feed roll (3) passes over the outside skirt of the fat supplier cylinder (5), which dips into a recipient (21) holding fat and, winding itself on belt (16) around conveyor belt roller (8) is hauled by belt (16) to the trough (18).

As the drawing makes clear, the trough walls are made up of two segments of belt (16) arranged V-wise and given an appropriate slope, so that, while belt (16) in continuing its motion passes over conveyor roller (11), it winds around roller (12) and conveyor roller (13) to then come back and form the other wall of the trough; the sheet of dough (20), having reached the bottom of trough (18), can not pass through the narrow slot left between the two segments of belt (16) and therefore, tends rather to rise up on the other side of the trough, being aided in this by the rising movement of the segment of belt (16) mentioned.

Considering however its nature and its weight, it being supported in no manner, the dough sheet falls back towards the base of the trough (18) and, owing to the falling movement of the segment of belt lying between the conveyor rollers (10 and 11), and to the rising movement of the segment of belt lying between conveyor rollers (13 and 14), it winds around itself forming a roll that may be left to grow up to the desired thickness, to then be removed from the rolling machine and sent on to the next stage in its working.

It is deemed that, by the above, both the method for forming rolls of dough, and puff-pastry dough in particular, and the machine for carrying out that said method, have been described and explained with adequate clarity. Clearly, both subjects of the invention may have made to them those modifications in their manner of doing their tasks that may be suggested by practical use, and this without going beyond the confines of the invention itself, as it appears from the following claims made.

## Claims

1. A method for forming rolls of dough, and in particular rolls of puff-pastry dough, characterized by the fact that one surface of dough sheet, coming from a feed roll, is, while it is being fed from this roll, spread with an eddible fat in such a manner that a uniform film of fat is deposited upon the dough sheet's surface.

2. A method for forming rolls of dough, and in particular of puff-pastry dough, according to claim 1, characterized by the fact that the dough sheet, with its fat-filmed face turned up, is made to advance up to a sort of trough, in which, owing to its consistency, its thickness, and to the relative movement of the walls of the trough, it coils back upon itself spiral-wise, the fat-filmed surface seeing to keeping the several coils formed separate the one from the other.

3. A machine for carrying out the method of the preceding claims, characterized by the fact that it substantially comprises a feed roll, a fat-applier cylinder, a conveyor belt on which the sheet of dough is laid, and a trough whose walls are formed of two sections of the conveyor belt.

4. A machine according to claim 3, characterized by the fact that the conveyor belt and its conveyor rollers are held up by a bed that can rotate around one axis, which axis is also the fulcrum of one of the conveyors belt's conveyor rollers, so as to make the supports of the cylinder carrying the dough sheet and of the fat-applier cylinder accessible, this latter cylinder dipping into an appropriate hopper.

5. A machine according to claim 3, characterized by the fact that one group of three of the conveyor belt's rollers sees to bringing closer together, in the area desired, two segments of the conveyor belt, thus forming the base of the trough, the said two sections of conveyor belt forming the moving sides of the trough, they being substantially arranged so as to form a V.